# EUROPÄISCHE PATENTANMELDUNG

(11) **EP 2 468 556 A2**
(43) Veröffentlichungstag der Anmeldung: **27.06.2012**
(21) Anmeldenummer: 11009756.5
(22) Anmeldetag: 10.12.2011
(51) Int. Cl.: B60K 15/035

(54) **Verfahren und Einrichtung zur Steuerung des Drucks im Inneren eines Kraftstofftanks**

(30) Priorität: 21.12.2010 DE 102010055318
(71) Anmelder: AUDI AG, 85045 Ingolstadt (DE)
(72) Erfinder: Hagen, Harald, 95473 Creussen (DE)
(74) Vertreter: Lehle, Josef

(57) **Zusammenfassung**

Die Erfindung betrifft ein Verfahren zur Steuerung des Drucks (p) im Inneren eines Kraftstofftanks (1) einer Brennkraftmaschine eines Kraftfahrzeugs, wobei der Druck (p) im Kraftstofftank (1) beim Erreichen eines vorbestimmten oberen Überdruck-Schwellenwerts (p_{üo}) entlastet wird. Die Erfindung betrifft weiter eine Einrichtung zur Steuerung des Drucks (p) im Kraftstofftank (1). Um die Emission von flüchtigen Kohlenwasserstoffen in die Umgebung zu reduzieren, wird erfindungsgemäß vorgeschlagen, dass der Druck (p) nur teilweise entlastet wird, wobei die Druckentlastung weniger als 20 %, vorzugsweise weniger als 10 % und am besten weniger als 5 % des oberen Überdruck-Schwellenwerts (p_{üo}) beträgt.

## Beschreibung

Die Erfindung betrifft ein Verfahren und eine Einrichtung zur Steuerung des Drucks im Inneren eines Kraftstofftanks einer Brennkraftmaschine eines Kraftfahrzeugs gemäß dem Oberbegriff der Ansprüche 1, 2, 9 und 10.

Insbesondere bei neueren Personenkraftwagen mit einem druckdichten Kraftstofftank wird dieser gewöhnlich durch Blasformen aus einem Kunststoffmaterial hergestellt, das zur Verringerung der Permeabilität des Kraftstofftanks mindestens eine Metallfolie enthalten kann. Die zur Herstellung von Kraftstofftanks verwendeten Kunststoffmaterialien beginnen allerdings häufig bereits bei Temperaturen oberhalb von 50°C zu fließen, wodurch sich der Kraftstofftank vor allem dann irreversibel verformen kann, wenn im Kraftstofftank entweder ein Überdruck oder ein Unterdruck herrscht, der außerhalb eines zulässigen Druckbereichs liegt, wobei der zulässige Überdruck gewöhnlich etwa 380 mbar und der zulässige Unterdruck gewöhnlich etwa 150 mbar beträgt.

Neuere Personenkraftwagen sind darüber hinaus mit einer Einrichtung zur Entlüftung und Belüftung ihres Kraftstofftanks ausgestattet. Diese Einrichtung erlaubt nicht nur beim Betanken des Kraftfahrzeugs ein Entweichen eines vom Kraftstoff verdrängten Gasgemischs aus dem Inneren des Kraftstofftanks, sondern verhindert zum anderen, dass sich bei einem größeren Anstieg oder Abfall der Umgebungstemperaturen aufgrund der durch den Temperaturanstieg hervorgerufenen Verdunstung von Kraftstoff bzw. aufgrund der durch den Temperaturabfall hervorgerufenen Kondensation von Kraftstoffdämpfen im Inneren des druckdicht verschlossenen Kraftstofftanks ein unerwünschter Überdruck bzw. Unterdruck aufbauen kann. Die Einrichtung umfasst in der Regel ein steuerbares Tankabsperrventil in Form eines vom Motorsteuergerät der Brennkraftmaschine angesteuerten Elektromagnetventils, zwei mechanische Tankdruckregelventile in Form eines Überdruckventils und eines Unterdruckventils, die zumeist als Bypassventile des Tankabsperrventils ausgebildet sind, sowie einen Aktivkohlefilter, der zwischen den Ventilen und der Umgebung angeordnet ist und bei der Entlüftung des Kraftstofftanks einen unerwünschten Austritt von Kohlenwasserstoffen aus dem Kraftstofftank in die Atmosphäre oder Umgebung verhindern soll. Das Tankabsperrventil ist normalerweise geschlossen und wird während des Betankens des Kraftstofftanks geöffnet, um das vom Kraftstoff verdrängte Gasgemisch aus dem Kopf- oder Gasraum des Kraftstofftanks abzuführen. Außerdem wird das Tankabsperrventil gewöhnlich während des Betriebs der Brennkraftmaschine geöffnet, wenn ein von einem Tankdrucksensor gemessener Druck im Kraftstofftank einen einstellbaren Überdruck-Schwellenwert übersteigt oder einen einstellbaren Unterdruck-Schwellenwert unterschreitet. Der Überdruck-Schwellenwert und der Unterdruck-Schwellenwert weisen jeweils einen Abstand von der Ober- bzw. Untergrenze des zulässigen Druckbereichs auf, wobei der Überdruck-Schwellenwert gewöhnlich etwa 150 mbar und der Unterdruck-Schwellenwert gewöhnlich etwa 100 mbar beträgt, um eine übermäßige Beanspruchung bzw. in Verbindung mit Wärme eine irreversible Verformung des Kraftstofftanks zu vermeiden. Da im Stillstand der Brennkraftmaschine in der Regel keine Steuerung des Tankabsperrventils möglich ist, erfolgt in diesem Betriebszustand die Begrenzung des Drucks im Inneren des Kraftstofftanks mit Hilfe der beiden Tankdruckregelventile. Dabei öffnet sich das Überdruckventil selbsttätig, wenn zum Beispiel bei einem Anstieg der Umgebungstemperaturen oder während einer Nachheizphase nach dem Abstellen der Brennkraftmaschine aufgrund einer Verdunstung von Kraftstoff im Inneren des Kraftstofftanks der Druck im Kraftstofftank auf den über dem Überdruck-Schwellenwert liegenden Öffnungsdruck des Überdruckventils ansteigt, während sich das Unterdruckventil selbsttätig öffnet, wenn zum Beispiel bei sinkenden Umgebungstemperaturen Kraftstoff im Inneren des Kraftstofftanks kondensiert und infolgedessen der Druck im Kraftstofftank auf einen unter dem Unterdruck-Schwellenwert liegenden Öffnungsdruck des Unterdruckventils absinkt. Das beim Entlüften des Kraftstofftanks aus diesem ausströmende Gasgemisch wird durch den Aktivkohlefilter geleitet, um die im Gasgemisch enthaltenen flüchtigen Kohlenwasserstoffe (HC) zu adsorbieren, so dass nur gereinigte Luft in die Umgebung gelangt.

Diese Vorgehensweise hat jedoch Nachteile: Wenn die Brennkraftmaschine nach einer längeren Fahrt abgestellt wird, strahlen die Brennkraftmaschine und der Abgastrakt noch über längere Zeit erhebliche Wärmemengen ab. Da insbesondere der Abgastrakt häufig nahe am Kraftstofftank vorbei verläuft, kann die vom Abgastrakt abgestrahlte Wärme zu einem beträchtlichen Temperaturanstieg und damit zu einer erhöhten Verdunstung von Kraftstoff im Kraftstofftank führen, zumal im Stillstand des Kraftfahrzeugs keine Kühlung durch den Fahrtwind erfolgt. Da derartige Betriebszustände bei vielen Fahrzeugen relativ häufig auftreten, wird dort somit der Kraftstofftank relativ häufig einem Druck ausgesetzt, der höher als der Überdruck-Schwellenwert ist. Diese häufige Druckbelastung in Verbindung mit der Erwärmung des Kraftstofftanks oder von Teilen desselben kann zu einer irreversiblen Verformung des Kraftstofftanks führen, wie eingangs bereits erwähnt wurde, und/oder zu einer Verringerung der Lebensdauer des Kraftstofftanks.

Außerdem muss der Öffnungsdruck eines als Schutzventil dienenden Überdruckventils so eingestellt werden, dass er über dem Überdruck-Schwellenwert liegt, bei dem das Tankabsperrventil vom Motorsteuergerät geöffnet wird. Dadurch wird der Aktivkohlefilter beim Öffnen des Überdruckventils einem relativ hohen Druckstoß ausgesetzt, wodurch das aus dem Kraftstofftank ausströmende Gasgemisch relativ schnell durch den Aktivkohlefilter hindurch gedrückt wird. Dies ist im Hinblick auf eine gleichmäßige Beladung des Aktivkohlefilters von Nachteil, da auf diese Weise ein Teil der im Gasgemisch enthaltenen Kohlenwasserstoffe erst in einem beträchtlichen Abstand vom Einlass des Aktivkohlefilters oder im Falle einer bereits vorhandenen stärkeren Beladung des Aktivkohlefilters überhaupt nicht absorbiert wird, sondern durch den Aktivkohlefilter hindurch in die Umgebung austritt. Außerdem reißt ein unter höherem Druck aus dem Kraftstofftank ausströmende Gasgemisch leichter flüssigen Kraftstoff mit sich, der im Aktivkohlefilter ebenfalls unerwünscht ist. Darüber hinaus führt der starke Druckabfall im Kraftstofftank nach dem Öffnen des Überdruckventils zu einem sofortigen Nachgasen von flüchtigen Kohlenwasserstoffen.

Auch im Betrieb der Brennkraftmaschine führt die bisher übliche Vorgehensweise zu Problemen: Beim Öffnen des Tankabsperrventils zum Entlüften des Kraftstofftanks strömt das aus dem Kraftstofftank austretende Gasgemisch mit einer relativ großen Strömungsmenge von 100 bis 200 Litern pro Minute durch den Aktivkohlefilter hindurch, was im Hinblick auf eine gleichmäßige Beladung ebenfalls ungünstig ist. Außerdem kann mitgerissener Kraftstoff bei derartigen Strömungsgeschwindigkeiten selbst mit Hilfe von Flüssigkeitsfallen nicht oder nur teilweise abgeschieden werden. Darüber hinaus kommt es auch beim Öffnen des Tankabsperrventils zu einem starken Nachgasen.

Ausgehend hiervon liegt der Erfindung die Aufgabe zugrunde, die Emission von flüchtigen Kohlenwasserstoffen in die Umgebung zu reduzieren.

Diese Aufgabe wird bei einem ersten Aspekt des erfindungsgemäßen Verfahrens dadurch gelöst, dass der Druck nur teilweise entlastet wird, wobei die Druckentlastung weniger als 20 %, vorzugsweise weniger als 10 % und am besten weniger als 5 % des oberen Überdruck-Schwellenwerts beträgt.

Der Erfindung liegt der Gedanke zugrunde, durch die geringe Druckentlastung des Kraftstofftanks die Menge des bei jeder Druckentlastung aus dem Kraftstofftank ausströmenden Gasgemischs stark zu verkleinern, so dass vom Aktivkohlefilter weder starke Druckstöße noch große Strömungsmengen aufgefangen werden müssen und dadurch eine bessere Adsorption der im Gasgemisch enthaltenen flüchtigen Kohlenwasserstoffe im Kraftstofftank ermöglicht wird. Mit anderen Worten erfolgt die Druckentlastung sehr viel häufiger als dies bisher der Fall war, jedoch immer nur bis zu einem vorbestimmten unteren Überdruck-Schwellenwert.

Vorzugsweise werden dabei der vorbestimmte obere und untere Überdruck-Schwellenwert so festgelegt, dass bei diesen Schwellenwerten eine irreversible Verformung des Kraftstofftanks selbst bei einer gleichzeitigen Erwärmung des Kraftstofftanks noch sicher verhindert werden kann, und dass bei diesen Schwellenwerten keine unzulässige Belastung des Kraftstofftanks auftritt, so dass dessen Lebensdauer verlängert werden kann. Beispielsweise kann der Überdruck-Schwellenwert etwa 150 mbar und der Unterdruck-Schwellenwert etwa 100 mbar betragen.

Das erfindungsgemäße Verfahren wird vor allem im Stillstand der Brennkraftmaschine eingesetzt, um den Druck im Kraftstofftank während einer an das Abstellen der Brennkraftmaschine anschließenden so genannten Nachheizphase durch die Druckentlastung zu begrenzen, kann jedoch auch im Betrieb der Brennkraftmaschine eingesetzt werden.

Um zu gewährleisten, dass der Druck im Kraftstofftank während der Nachheizphase möglichst niedrig bleibt, sieht ein zweiter Aspekt des erfindungsgemäßen Verfahrens bzw. eine bevorzugte Ausgestaltung vor, dass der Druck im Kraftstofftank bei oder unmittelbar nach dem Abstellen der Brennkraftmaschine entlastet wird, vorzugsweise bis auf Umgebungsdruck. Dazu kann das Tankabsperrventil vom Motorsteuergerät geöffnet werden, von dem das Tankabsperrventil zu diesem Zweck im "Nachlaufs" angesteuert wird. Durch die Druckentlastung wird der Druck im Kraftstofftank vor Beginn der Nachheizphase so weit wie möglich reduziert, so dass während der Nachheizphase eine maximale Kraftstoffmenge im Kraftstofftank verdunsten kann, bevor der Druck im Kraftstofftank den vorbestimmten oberen Überdruck-Schwellenwert erstmalig erreicht.

Die teilweise Druckentlastung, insbesondere während der Nachheizphase, kann gemäß einer ersten vorteilhaften Ausgestaltung des erfindungsgemäßen Verfahrens und einer ersten Variante der erfindungsgemäßen Einrichtung mittels eines mechanischen Überdruckventils erfolgen, das sich selbsttätig öffnet, wenn der Druck im Kraftstofftank den vorbestimmten oberen Überdruck-Schwellenwert erreicht, und das sich selbsttätig schließt, nachdem der Druck im Kraftstofftank um weniger als 20 % und vorzugsweise weniger als 10 % des oberen Überdruck-Schwellenwerts entlastet worden ist. Diese Variante hat den Vorteil, dass die Druckregelung rein mechanisch erfolgen kann und die Einrichtung ohne eine Zufuhr von elektrischem Strom auskommt. Dadurch kann die Einrichtung auch bei existierenden Kraftfahrzeugen eingesetzt werden kann, bei denen nach dem Abstellen der Brennkraftmaschine und dem Ausschalten der Zündung die Stromversorgung gewöhnlich unterbrochen ist.

Diese Variante hat darüber hinaus noch den Vorteil, dass im Betrieb der Brennkraftmaschine der Druck im Kraftstofftank allein mittels des mechanischen Überdruckventils und eines mechanischen Unterdruckventils gesteuert werden kann, die vorzugsweise zusammen mit einem steuerbaren Tankabsperrventil eine Einrichtung zur Belüftung und Entlüftung des Kraftstofftanks bilden. Dabei bleibt das Tankabsperrventil während des Betriebs der Brennkraftmaschine geschlossen und wird nur zum Betanken des Kraftstofftanks geöffnet, während ein Über- und Unterdruck im Kraftstofftank mit Hilfe des mechanischen Überdruckventils und des mechanischen Unterdruckventils abgebaut wird. Abgesehen vom Betanken können dadurch auch im Betrieb der Brennkraftmaschine die Strömungsmengen des aus dem Kraftstofftank zum Aktivkohlefilter strömenden Gasgemischs und die dabei auf den Aktivkohlefilter einwirkenden Druckstöße gering gehalten werden.

Alternativ kann die teilweise Druckentlastung gemäß einer anderen vorteilhaften Ausgestaltung des erfindungsgemäßen Verfahrens und einer zweiten Variante der erfindungsgemäßen Einrichtung mittels eines steuerbaren Tankabsperrventils erfolgen, das wie das Überdruckventil zweckmäßig Teil einer Einrichtung zur Belüftung und Entlüftung des Kraftstofftanks ist und kurzzeitig geöffnet wird, wenn der Druck im Kraftstofftank den vorbestimmten oberen Überdruck-Schwellenwert erreicht oder übersteigt. Da die Menge des bei geöffnetem Tankabsperrventil durch das Tankabsperrventil ausströmenden Gasgemischs im Wesentlichen nur durch den Öffnungsquerschnitt und die Öffnungszeit des Tankabsperrventils sowie dem Überdruck im Kraftstofftank beim Öffnen des Ventils bestimmt wird, wobei der Öffnungsquerschnitt des Tankabsperrventils feststeht und der Überdruck im Kraftstofftank beim Öffnen des Ventils dem vorbestimmten oberen Überdruck-Schwellenwert entspricht, kann die für eine Druckentlastung von weniger als 20 % und vorzugsweise von weniger als 10 % des vorbestimmten oberen Überdruck-Schwellenwerts erforderliche Öffnungszeit im Voraus recht genau berechnet werden.

In diesem Fall umfasst die erfindungsgemäße Einrichtung vorteilhaft Mittel zum Öffnen des Tankabsperrventils, wobei die letzteren zweckmäßig einen Zeitschalter einschließen, beispielsweise in Form eines Relais mit einem Zeitglied, der nach jedem Öffnen des Tankabsperrventils aktiviert wird und dafür sorgt, dass das Tankabsperrventil nach der berechneten kurzen Öffnungszeit wieder geschlossen wird, bevor der Druck im Kraftstofftank um mehr als 20 % und vorzugsweise mehr als 10 % des oberen Überdruck-Schwellenwerts entlastet worden ist.

Um das Tankabsperrventil zum Öffnen in Abhängigkeit vom Druck im Kraftstofftank zu steuern, ist vorteilhaft ein Druckschalter vorgesehen, der beim Erreichen des oberen Überdruck-Schwellenwerts schaltet und vorteilhaft ebenso wie der Zeitschalter Teil einer Schaltung zur Aktivierung des Tankabsperrventil ist.

Eine weitere vorteilhafte Ausgestaltung der Erfindung sieht vor, dass das Öffnen des Tankabsperrventils nicht nur in Abhängigkeit vom Druck im Kraftstofftank, sondern auch in Abhängigkeit von der Temperatur im Kraftstofftank oder in der Nähe des Kraftstofftanks gesteuert wird. Das Tankabsperrventil wird zweckmäßig nur dann geöffnet, wenn der Druck im Kraftstofftank den oberen Überdruck-Schwellenwert erreicht und zugleich die Temperatur im Kraftstofftank oder in der Nähe des Kraftstofftanks oberhalb von einem vorbestimmten Temperatur-Schwellenwert liegt. Damit wird erreicht, dass das Öffnen des Tankabsperrventil unterbleibt, wenn die Brennkraftmaschine nach einer Kurzfahrt abgestellt wird, bei der sich der Abgastrakt nicht wesentlich erwärmt. Zur Steuerung des Tankabsperrventils in Abhängigkeit von der Temperatur im Kraftstofftank oder in der Nähe des Kraftstofftanks dient zweckmäßig ein im oder am Kraftstofftank angeordneter Temperaturschalter, der ebenfalls Teil der Schaltung zur Aktivierung des Tankabsperrventil ist und bevorzugt mit dem Druckschalter in Reihe geschaltet ist.

Im Folgenden wird die Erfindung anhand von einigen in der Zeichnung dargestellten Ausführungsbeispielen näher erläutert. Es zeigen
Fig. 1 eine schematische Ansicht eines Kraftstofftanks einer Brennkraftmaschine eines Kraftfahrzeugs mit einer Be- und Entlüftungseinrichtung, die ein steuerbares Tankabsperrventil, und zwei mechanische Tankdruckregelventile in Form eines Überdruckventils und eines Unterdruckventils umfasst;
Fig. 2 eine schematische Längsschnittansicht des Tankabsperrventils;
Fig. 3 eine Längsschnittansicht der beiden Tankdruckregelventile;
Fig. 4 eine schematische Darstellung einer Schaltung zur Aktivierung des Tankabsperrventils;
Fig. 5 ein Diagramm des zeitabhängigen Temperatur- und Druckverlaufs im Kraftstofftank nach dem Abstellen der Brennkraftmaschine bei einem erfindungsgemäßen Verfahren zur Steuerung des Drucks im Kraftstofftank.

Bei dem in der Zeichnung dargestellten Kraftstofftank 1 eines Kraftfahrzeugs handelt es sich um einen druckdichten Kraftstofftank 1, der durch Blasformen aus einem gas- und flüssigkeitsdichten Sandwichmaterial hergestellt worden ist. Zum Betanken weist der Krafftstofftank 1 einen durch einen Tankdeckel 2 verschließbaren Einfüllstutzen 3 auf. In der Nähe eines Bodens 4 des Kraftstofftanks 1 befindet sich eine Fördereinheit 5 mit einer im Kraftstoff untergetauchten Kraftstoffpumpe 6.

Der Kraftstofftank 1 ist mit einer Be- und Entlüftungseinrichtung ausgestattet, mit der sich auch der Druck im Inneren des Kraftstofftanks 1 steuern lässt. Die Be- und Entlüftungseinrichtung umfasst einen Aktivkohlefilter 7, ein Tankabsperrventil 8, zwei Tankdruckregelventile 9, 10, eine Flüssigkeitsfalle 11, einen Tankdrucksensor 12 und mehrere Roll-Over-Ventile 13, 14, 15. Die im Gas- oder Kopfraum des Kraftstofftanks 1 angeordnete, an die Oberseite des Kraftstofftanks 1 angrenzende Flüssigkeitsfalle 11 soll verhindern, dass beim Entlüften des Kraftstofftanks 1 durch das aus dem Inneren des Kraftstofftanks 1 ausströmende Gasgemisch flüssigen Kraftstoff bis zum Aktivkohlefilter 7 mitgerissen wird. Die Roll-Over-Ventile 12, 13, 14 sollen einen Austritt von flüssigem Kraftstoff aus dem Kraftstofftank 1 verhindern, wenn das Kraftfahrzeug zum Beispiel bei einem Unfall eine übermäßige Schräglage aufweist oder sich überschlägt. Der Aufbau einer Flüssigkeitsfalle 11 oder von Roll-Over-Ventilen 12, 13, 14 ist an sich bekannt und soll daher nicht näher beschrieben werden.

Weiter ist der Einfüllstutzen 3 durch eine On-Board-Diagnose-Leitung 16 mit der Flüssigkeitsfalle 11 in einem Kopf- oder Gasraum 17 des Kraftstofftanks 1 oberhalb des höchsten Kraftstoffspiegels verbunden, so dass das Fehlen des Tankdeckels 2 detektiert werden kann, um einen Druckausgleich und ein Entweichen von Kohlenwasserstoffen durch den Einfüllstutzen 3 zu verhindern. Da sich beim Fehlen des Tankdeckels 2 im Inneren des Kraftstofftanks 1 kein Über- oder Unterdruck einstellen kann, lässt sich das Fehlen des Tankdeckels 2 durch Auswertung der Signale des Tankdrucksensors 12 erfassen.

Der außerhalb des Kraftstofftanks 1 angeordnete Aktivkohlefilter 7 verhindert, dass bei einer Entlüftung des Kraftstofftanks 1 flüchtige Kohlenwasserstoffe (HC) in die Umgebung gelangen, und enthält zu diesem Zweck eine Füllung aus Aktivkohle, die flüchtige Kohlenwasserstoffe (HC) absorbiert. Wenn der Aktivkohlefilter 7 mit flüchtigen Kohlenwasserstoffen beladen ist, wird er regeneriert, indem Umgebungsluft durch den Aktivkohlefilter 7 hindurch in einen Ansaugtrakt (nicht dargestellt) der Brennkraftmaschine angesaugt wird, um den Filter 7 zu spülen und die flüchtigen Kohlenwasserstoffe in den Brennräumen der Brennkraftmaschine zu verbrennen.

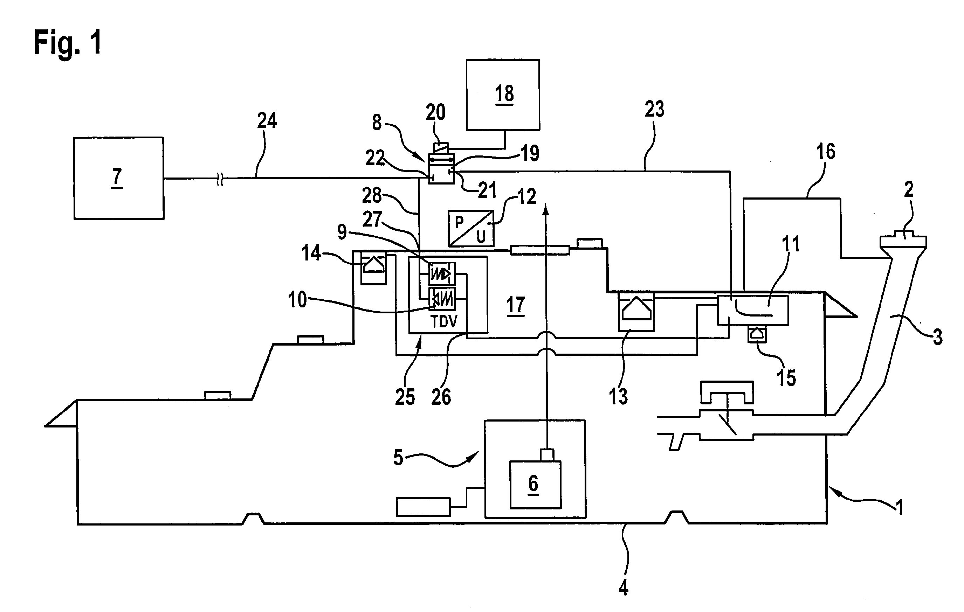

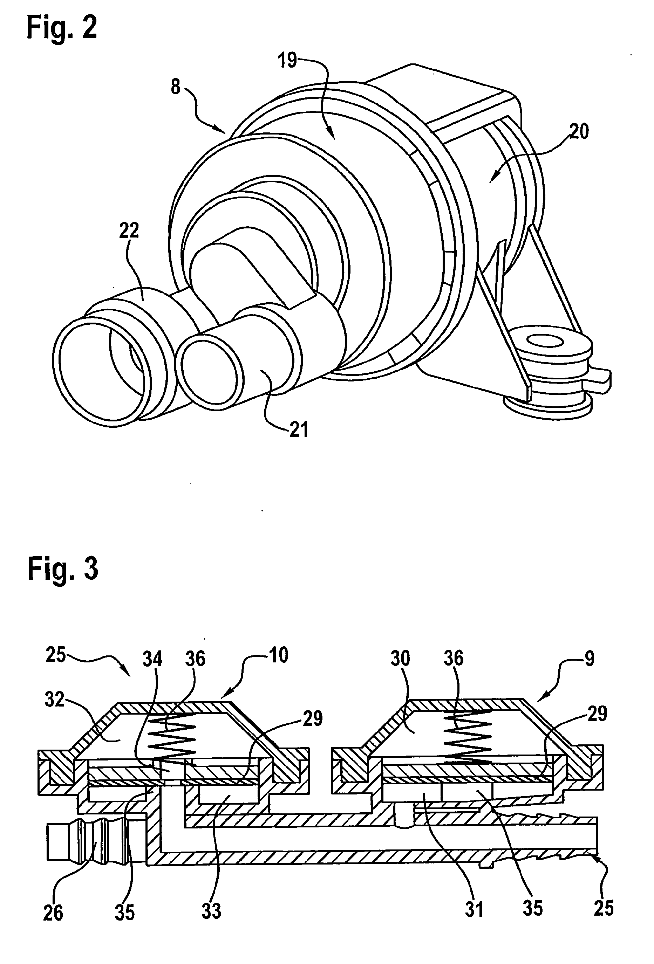

Bei dem außerhalb des Kraftstofftanks 1 angeordneten Tankabsperrventil 8 handelt es sich um ein elektromagnetisches Ventil, das normalerweise geschlossen ist und unter der Steuerung eines Motorsteuergeräts 18 der Brennkraftmaschine getaktet geöffnet werden kann. Wie am besten in Fig. 2 dargestellt, umfasst das Tankabsperrventil 8 einen Ventilteil 19 und einen Ventilbetätigungsteil 20. Der Ventilteil 19 umfasst einen Ventilsitz und ein in Bezug zum Ventilsitz bewegliches Ventilglied (nicht dargestellt) sowie einem Tankanschluss 21 und einem Filteranschluss 22. Der Ventilbetätigungsteil 20 enthält eine Elektromagnetspule und einen auf das Ventilglied einwirkenden Anker (nicht dargestellt). Wenn die Elektromagnetspule erregt wird, hebt der Anker das Ventilglied vom Ventilsitz ab, woraufhin die beiden Anschlüsse 21, 22 miteinander kommunizieren. Wie in Fig. 1 dargestellt, ist der Tankanschluss 21 durch eine Leitung 23 mit dem Inneren des Kraftstofftanks 1 verbunden, während der Filteranschluss 22 durch eine Leitung 24 mit dem Aktivkohlefilter 7 verbunden ist.

Bei den beiden innerhalb des Kraftstofftanks 1 angeordneten Tankdruckregelventilen 9, 10 handelt es sich um ein rein mechanisches Überdruckventil 9 und ein rein mechanisches Unterdruckventil 10, die in Parallelschaltung zu einer Ventileinheit oder Ventilbaugruppe 25 zusammengefasst und im Kopf- oder Gasraum 17 untergebracht sind. Die Ventileinheit oder Ventilbaugruppe 25 weist einen mit der Flüssigkeitsfalle 11 verbundenen Tankanschluss 26 und einen hinter dem Tankabsperrventil 8 durch eine Leitung 28 mit der der Leitung 24 verbundenen Filteranschluss 27 auf.

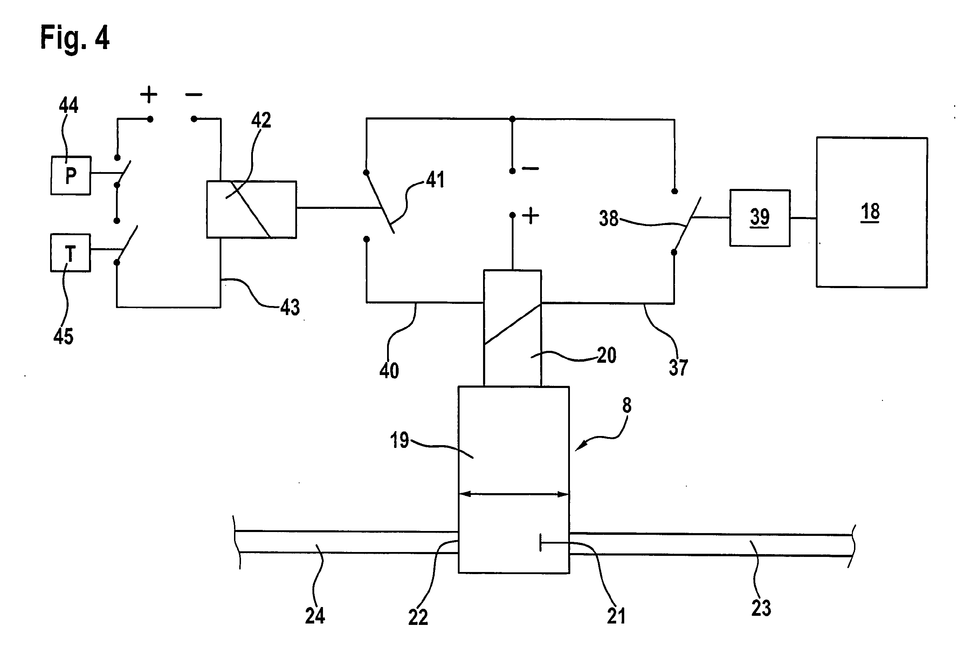

Wie am besten in Fig. 4 dargestellt, weisen die beiden Tankdruckregelventile 9, 10 jeweils zwei durch eine Membran 29 getrennte Kammern 30, 31; 32, 33 auf, von denen eine 31; 32 mit dem Tankanschluss 26 und eine 30; 33 mit dem Filteranschluss 27 kommuniziert. Die Membran 29 jedes Ventils 9, 10 ist mit einer Öffnung 34 versehen und liegt bei geschlossenem Ventil 9, 10 um die Öffnung 34 herum auf einem zylindrischen Rohrstutzen 35 auf, durch den bei dem Unterdruckventil 10 die Unterdruckkammer 32 mit dem Kraftstofftank 1 und bei dem Überdruckventil 9 die Kammer 30 mit dem Aktivkohlefilter 7 kommuniziert. Die Membran 29 wird von einer Feder 36 gegen das freie obere Ende des Rohrstutzens 35 angepresst und sorgt dafür, dass die beiden Kammern 30, 31; 32, 33 bei geschlossenem Ventil 9, 10, d.h. normalerweise, nicht miteinander kommunizieren. Wenn der Druck im Kraftstofftank 1 unter einen Öffnungsdruck des Unterdruckventils 10 absinkt, wird die Membran 29 des Unterdruckventils 10 infolge des Unterdrucks in der durch die Öffnung 34 und den Rohrstutzen 35 mit dem Tankanschluss 25 kommunizierenden Unterdruckkammer 32 entgegen der Kraft der Feder 36 vom Rohrstutzen 35 abgehoben, wodurch die beiden Kammern 32, 33 unter Öffnen des Ventils 10 miteinander verbunden werden. Wenn der Druck im Kraftstofftank über einen Öffnungsdruck des Überdruckventils 9 ansteigt, wird die Membran 29 des Überdruckventils 9 durch den Druck in der Überdruckkammer 31 entgegen der Kraft der Feder 36 vom Rohrstutzen 35 abgehoben, wodurch die beiden Kammern 30, 31 ebenfalls unter Öffnen des Ventils 9 miteinander verbunden werden.

Im Stillstand der Brennkraftmaschine kann entweder das Tankabsperrventil 8 oder das Überdruckventil 9 benutzt werden, um einen während einer Nachheizphase der Brennkraftmaschine infolge einer Erwärmung des Kraftstofftanks 1 durch Wärmeabstrahlung der Brennkraftmaschine oder ihres Abgastrakts im Inneren des Kraftstofftanks 1 erzeugten Überdruck auf einen oberen Überdruck-Schwellenwert p_{üo} zu begrenzen und dadurch eine übermäßige Beanspruchung und/oder eine irreversible Verformung des Kraftstofftanks durch die Erwärmung und den Überdruck zu verhindern.

Wenn der Überdruck im Kraftstofftank 1 mit Hilfe des Tankabsperrventils 8 begrenzt werden soll, kann die in Fig. 4 dargestellten Schaltung zur Aktivierung des Tankabsperrventils eingesetzt werden. Die Schaltung umfasst einen ersten Stromkreis 37, der neben der Elektromagnetspule im Ventilbetätigungsteil 20 des Tankabsperrventils 8 einen Schalter 38 enthält, der unter der Steuerung des Motorsteuergeräts 18 von einem Betätigungsorgan 39 geöffnet bzw. geschlossen werden kann. Der Schalter 38 dient dazu, das Tankabsperrventil 8 unmittelbar nach dem Abstellen der Brennkraftmaschine zu öffnen, um den Druck im Kraftstofftank 1 zu entlasten. Ein zweiter Stromkreis 40 der Schaltung ist parallel zum Stromkreis 37 geschaltet und umfasst neben der Elektromagnetspule im Ventilbetätigungsteil 20 des Tankabsperrventils 8 einen Zeitschalter 41, der durch ein Relais 42 mit einem verstellbaren Zeitglied betätigt wird. Das Relais 42 unterbricht normalerweise den Stromkreis 40 in einem Zustand, in dem das Tankabsperrventil 8 geschlossen ist. Wenn dem Relais 42 durch einen dritten Stromkreis 43 der Schaltung Strom zugeführt wird, schließt das Relais 42 den Stromkreis 40, wodurch der Elektromagnetspule des Tankabsperrventils 8 Strom zugeführt und dadurch das normalerweise geschlossene Tankabsperrventil 8 geöffnet wird. Das Zeitglied des Relais 42 sorgt dafür, dass nach einer kurzen Zeitspanne die Stromzufuhr zum Relais 42 unterbrochen und damit auch der Zeitschalter 41 wieder geöffnet wird, wodurch sich das Tankabsperrventil 8 wieder schließt. Die am Zeitglied einstellbare Öffnungszeit des Tankabsperrventils 8 wird in Abhängigkeit vom Öffnungsquerschnitt des Tankabsperrventils 8 und des gewünschten oberen Überdruck-Schwellenwerts p_{üo} so berechnet, dass der Druck im Kraftstofftank 1 während der Öffnungszeit des Tankabsperrventils 8 nur teilweise entlastet wird, vorzugsweise um weniger als 20 % und am besten um weniger als 10 % des oberen Überdruck-Schwellenwerts p_{üo}. Bei einem oberen Überdruck-Schwellenwert p_{üo} von 150 mbar, entsprechend einer positiven Druckdifferenz zwischen dem Inneren des Kraftstofftanks 1 und der Umgebung, beträgt somit die Druckentlastung auf einen unteren Überdruck-Schwellenwert p_{üu} vorzugsweise weniger als 30 mbar und am besten weniger als 15 mbar. Der dritte unabhängige Stromkreis 43 für die Stromzufuhr zum Relais 42 enthält einen Druckschalter 44 sowie einen Temperaturschalter 45. Der Druckschalter 44 ist im Inneren des Kraftstofftanks 1 angeordnet verbunden und so geschaltet, dass er schließt, wenn der Druck im Kraftstofftank 1 den oberen Überdruck-Schwellenwert p_{üo} erreicht, und öffnet, wenn der Druck im Kraftstofftank den unteren Überdruck-Schwellenwert p_{üu} erreicht. Der Temperaturschalter 45 ist ebenfalls im Inneren des Kraftstofftanks 1 angeordnet und so geschaltet, dass er schließt, wenn die Temperatur T im Kraftstofftank einen Temperatur-Schwellenwert Tₛ von etwa 50°C übersteigt, und öffnet, wenn die Temperatur T im Kraftstofftank unter den Temperatur-Schwellenwert Tₛ absinkt.

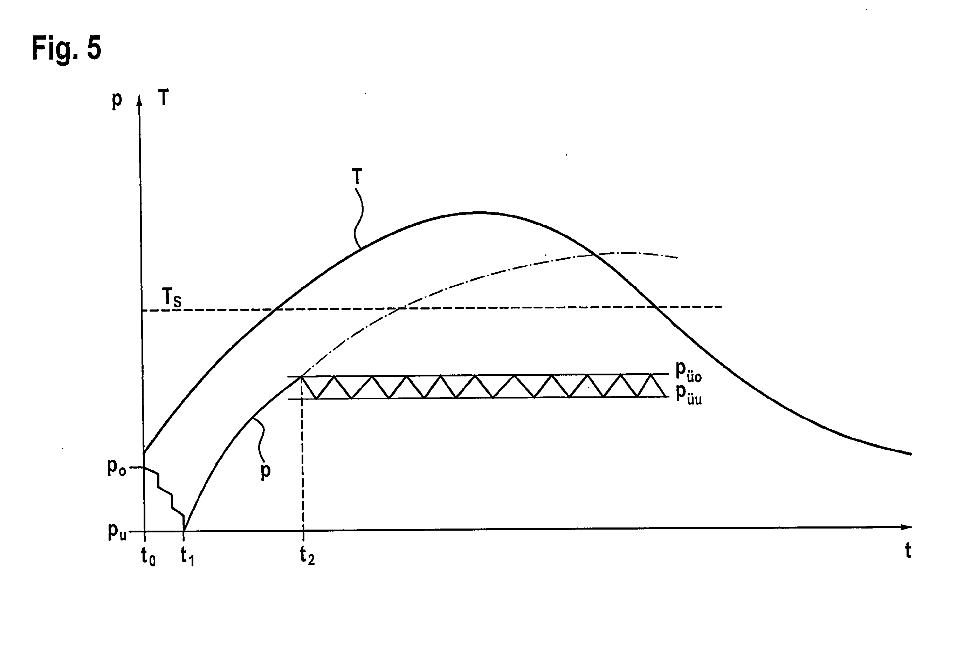

Mit dieser Schaltung kann nach dem Abstellen der Brennkraftmaschine der in Fig. 5 dargestellte Druckverlauf im Inneren des Kraftstofftanks 1 erzielt werden, der von der mit p gekennzeichneten Linie wiedergegeben und nachfolgend erläutert wird. Die mit T gekennzeichnete Linie zeigt den Temperaturverlauf im Kraftstofftank 1 während einer Nachheizphase, in der die Temperatur im Kraftstofftank 1 nach dem Abstellen der Brennkraftmaschine infolge einer Wärmeabstrahlung aus dem Abgastrakt zuerst allmählich ansteigt und dann wieder allmählich abnimmt.

Unmittelbar nach dem Abstellen der Brennkraftmaschine im Zeitpunkt t₀ wird das Tankabsperrventil 8 vom Motorsteuergerät 18 durch abwechselndes Öffnen und Schließen des Schalters 38 mehrmals hintereinander in kurzen Zeitintervallen für kurze Zeit geöffnet, um den beim Abstellen herrschenden Druck p₀ im Kraftstofftank bis zum Zeitpunkt t₁ an den Umgebungsdruck pᵤ anzugleichen. Infolge der Erwärmung des Kraftstofftanks 1 durch die Wärmeabstrahlung aus dem Abgastrakt steigt anschließend der Druck p im Inneren des Kraftstofftanks 1 infolge der Verdunstung von Kraftstoff bis zum Zeitpunkt t₂ wieder allmählich an, wobei er dem Temperaturverlauf T etwas zeitversetzt folgt. Wenn der Druck p im Zeitpunkt t₂ den oberen Überdruck-Schwellenwert p_{üo}. erreicht, schließt der Druckschalter 44. Wenn die Temperatur T im Kraftstofftank 1 zuvor den Temperatur-Schwellenwert Tₛ überschritten hat und daher auch der Temperaturschalter 45 geschlossen ist, wird dem Relais 42 für kurze Zeit Strom zugeführt und der Zeitschalter 41 kurzzeitig geschlossen, bis das Zeitglied im Relais 42 die Stromzufuhr wieder unterbricht. Bei geschlossenem Zeitschalter 41 wird der Elektromagnetspule des Tankabsperrventils 8 Strom zugeführt, so dass das Tankabsperrventil 8 für kurze Zeit geöffnet wird. Wie bereits angegeben, wird die Öffnungszeit des Tankabsperrventils 8 am Zeitglied so eingestellt, dass der Druck im Kraftstofftank 1 während der Öffnungszeit bis etwa auf den unteren Überdruck-Schwellenwert p_{üu} absinkt. Nach dem Schließen des Tankabsperrventils 8 steigt der Druck im Kraftstofftank 1 wieder bis zum oberen Überdruck-Schwellenwert p_{üo} an, wo das Tankabsperrventil 8 durch Schließen des Druckschalters 44 und dann des Zeitschalters 41 erneut für kurze Zeit geöffnet wird. Dieser Vorgang wiederholt sich, bis entweder die Temperatur T im Kraftstofftank 1 wieder unter den Temperatur-Schwellenwert Tₛ absinkt, so dass sich der Temperaturschalter 45 wieder öffnet, oder bis der Druck p ständig unter dem oberen Überdruck-Schwellenwert p_{üo} bleibt, so dass sich der Druckschalter 44 nicht mehr öffnet.

Da bei geöffnetem Tankabsperrventil 8 nur kleine Strömungsmengen des Gasgemischs aus dem Kraftstofftank 1 zum Aktivkohlefilter 7 gelangen und dieser wegen der geringen Druckdifferenz zwischen dem oberen Überdruck-Schwellenwert p_{üo} und dem unteren Überdruck-Schwellenwert p_{üu} nur sehr geringen Druckstößen ausgesetzt ist, werden die flüchtigen Kohlenwasserstoffe im Gasgemisch vom Aktivkohlefilter 7 gut absorbiert. Außerdem wird der Kraftstofftank 1 weder hohen Druckbeanspruchungen ausgesetzt, noch einer irreversiblen Verformung durch gleichzeitige Beaufschlagung mit Druck und Wärme. Das Überdruckventil 9 dient in diesem Fall nur als Schutzventil und wird so ausgelegt, dass es sich erst bei einem Öffnungsdruck öffnet, der etwas oberhalb des oberen Überdruck-Schwellenwerts p_{üo}, liegt.

Wenn der Druck p oder Überdruck mit Hilfe des Überdruckventils 9 begrenzt werden soll, bleibt das Tankabsperrventil 8 nach dem Abstellen der Brennkraftmaschine ganz geschlossen. Bei dem Überdruckventil 9 werden die Feder 36 und die Größe der Oberfläche der Membran 29 so ausgelegt bzw. aufeinander abgestimmt, dass sich das Überdruckventil 9 öffnet, wenn der Druck p im Kraftstofftank 1 den oberen Überdruck-Schwellenwert p_{üo} erreicht, und sich wieder schließt, wenn der Druck auf den unteren Überdruck-Schwellenwerts p_{üu} abgesunken ist. Damit kann ein ähnlicher Druckverlauf p wie in Fig. 5 erzielt werden, der jedoch von der Temperatur T im Kraftstofftank 1 unabhängig ist.

Dafür kann der Druck p im Inneren des Kraftstofftanks 1 auch während des Betriebs der Brennkraftmaschine ausschließlich mit Hilfe des Überdruckventils 9 und des Unterdruckventils 10 innerhalb eines Druckbereichs gehalten werden, der nach oben zu vom oberen Überdruck-Schwellenwert p_{üo} und nach unten von einem durch die Auslegung des Unterdruckventils 10 festgelegten Unterdruck-Schwellenwert pᵤ begrenzt wird. Auch im Betrieb der Brennkraftmaschine öffnet sich dann das Überdruckventil 9 selbsttätig, wenn der Druck p im Kraftstofftank 1 den oberen Überdruck-Schwellenwert p_{üo} erreicht. Das Unterdruckventil 10 öffnet sich selbsttätig, wenn der Druck im Kraftstofftank 1 den Unterdruck-Schwellenwert pᵤ erreicht. Innerhalb dieses Druckbereichs kann das Tankabsperrventil 8 bei jedem beliebigen Druck p geöffnet werden, um den Kraftstofftank zu entlüften.

### BEZUGSZEICHENLISTE

- 1: Kraftstofftank
- 2: Tankdeckel
- 3: Einfüllstutzen
- 4: Boden
- 5: Fördereinheit
- 6: Kraftstoffpumpe
- 7: Aktivkohlefilter
- 8: Tankabsperrventil
- 9: Überdruckventil
- 10: Unterdruckventil
- 11: Flüssigkeitsfalle
- 12: Tanksdrucksensor
- 13: Roll-Over-Ventil
- 14: Roll-Over-Ventil
- 15: Roll-Over-Ventil
- 16: On-Board-Diagnose-Leitung
- 17: Kopf- oder Gasraum
- 18: Motorsteuergerät
- 19: Ventilteil Tankabsperrventil
- 20: Ventilbetätigungsteil Tankabsperrventil
- 21: Tankanschluss Tankabsperrventil
- 22: Filteranschluss Tankabsperrventil
- 23: Leitung
- 24: Leitung
- 25: Ventileinheit oder Ventilbaugruppe
- 26: Tankanschluss Ventileinheit oder Ventilbaugruppe
- 27: Filteranschluss Ventileinheit oder Ventilbaugruppe
- 28: Leitung
- 29: Membran
- 30: Kammer
- 31: Überdruckkammer
- 32: Unterdruckkammer
- 33: Kammer
- 34: Öffnung
- 35: Rohrstutzen
- 36: Feder
- 37: Stromkreis
- 38: Schalter
- 39: Betätigungsorgan
- 40: Stromkreis
- 41: Zeitschalter
- 42: Relais
- 43: Stromkreis
- 44: Druckschalter
- 45: Temperaturschalter

## Patentansprüche

1. Verfahren zur Steuerung des Drucks im Inneren eines Kraftstofftanks einer Brennkraftmaschine eines Kraftfahrzeugs, wobei der Druck im Kraftstofftank beim Erreichen eines vorbestimmten oberen Überdruck-Schwellenwerts entlastet wird, **dadurch gekennzeichnet, dass** der Druck (p) nur teilweise entlastet wird, wobei die Druckentlastung weniger als 20 %, vorzugsweise weniger als 10 % und am besten weniger als 5 % des oberen Überdruck-Schwellenwerts (p_{üo}) beträgt.

2. Verfahren zur Steuerung des Drucks im Inneren eines Kraftstofftanks einer Brennkraftmaschine eines Kraftfahrzeugs, insbesondere nach Anspruch 1, **dadurch gekennzeichnet, dass** der Druck (p) im Kraftstofftank (1) bei oder unmittelbar nach dem Abstellen der Brennkraftmaschine gezielt entlastet wird.

3. Verfahren nach Anspruch 2, **dadurch gekennzeichnet, dass** der Druck (p) im Kraftstofftank (1) bis zum Umgebungsdruck (pᵤ) entlastet wird.

4. Verfahren nach einem der Ansprüche 1 bis 3, **dadurch gekennzeichnet, dass** der Druck (p) im Kraftstofftank (1) mittels eines mechanischen Überdruckventils (9) entlastet wird, das sich selbsttätig öffnet, wenn der Druck (p) im Kraftstofftank (1) den vorbestimmten oberen Überdruck-Schwellenwert (p_{üo}) erreicht, und das sich selbsttätig schließt, wenn der Druck (p) im Kraftstofftank (1) um weniger als 20 % und vorzugsweise weniger als 10 % des oberen Überdruck-Schwellenwerts (p_{üo}) entlastet worden ist.

5. Verfahren nach Anspruch 4, **dadurch gekennzeichnet, dass** im Betrieb der Brennkraftmaschine der Druck (p) im Kraftstofftank (1) mittels des mechanischen Überdruckventils (9) und eines mechanischen Unterdruckventils (10) gesteuert wird.

6. Verfahren nach einem der Ansprüche 1 bis 3, **dadurch gekennzeichnet, dass** der Druck (p) im Kraftstofftank (1) mittels eines steuerbaren Tankabsperrventils (8) entlastet wird, das kurzzeitig geöffnet wird, wenn der Druck (p) im Kraftstofftank (1) den vorbestimmten oberen Überdruck-Schwellenwert (p_{üo}) erreicht, wobei die Öffnungszeit so kurz gewählt wird, dass die Druckentlastung weniger als 20 % und vorzugsweise weniger als 10 % des oberen Überdruck-Schwellenwerts (p_{üo}) beträgt.

7. Verfahren nach Anspruch 6, **dadurch gekennzeichnet, dass** das Tankabsperrventil (8) in Abhängigkeit vom Druck (p) im Kraftstofftank (1) gesteuert wird.

8. Verfahren nach einem der Ansprüche 6 oder 7, **dadurch gekennzeichnet, dass** das Tankabsperrventil (8) in Abhängigkeit von der Temperatur (T) im Kraftstofftank (1) oder in der Nähe des Kraftstofftanks (1) gesteuert wird.

9. Einrichtung zur Steuerung des Drucks im Inneren eines Kraftstofftanks einer Brennkraftmaschine eines Kraftfahrzeugs, mit einem mechanischen Überdruckventil, das sich selbsttätig öffnet, wenn der Druck im Kraftstofftank einen vorbestimmten oberen Überdruck-Schwellenwert erreicht, **dadurch gekennzeichnet, dass** sich das Überdruckventil (9) selbsttätig schließt, nachdem der Druck (p) im Kraftstofftank (1) um weniger als 20 % und vorzugsweise weniger als 10 % des oberen Überdruck-Schwellenwerts (p_{üo}) entlastet worden ist.

10. Einrichtung zur Steuerung des Drucks im Inneren eines Kraftstofftanks einer Brennkraftmaschine eines Kraftfahrzeugs, mit einem steuerbaren Tankabsperrventil und Mitteln zum Öffnen des Tankabsperrventils, wenn der Druck im Kraftstofftank einen vorbestimmten oberen Überdruck-Schwellenwert erreicht, **dadurch gekennzeichnet, dass** die Mittel (40, 41, 42, 43, 44, 45) zum Öffnen des Tankabsperrventils (8) einen Zeitschalter (41) umfassen, der das Tankabsperrventil (8) nach kurzer Zeit schließt, bevor der Druck (p) im Kraftstofftank (1) um mehr als 30 % und vorzugsweise mehr als 20 % des oberen Überdruck-Schwellenwerts (p_{üo}) entlastet worden ist.

11. Einrichtung nach Anspruch 10, **dadurch gekennzeichnet, dass** die Mittel (40, 41, 42, 43, 44, 45) zum Öffnen des Tankabsperrventils (8) einen Druckschalter (44) umfassen.

12. Einrichtung nach einem der Ansprüche 9 bis 11, **dadurch gekennzeichnet, dass** die Mittel (40, 41, 42, 43, 44, 45) zum Öffnen des Tankabsperrventils (8) einen Temperaturschalter (45) umfassen.

13. Einrichtung nach Anspruch 11 und 12, **dadurch gekennzeichnet, dass** der Druckschalter (44) und der Temperaturschalter (45) in Reihe geschaltet sind.
